Europäisches Patentamt

European Patent Office

Office européen des brevets

Numéro de publication: **0 215 719**
**A1**

## DEMANDE DE BREVET EUROPEEN

Numéro de dépôt: **86430017.3**

Date de dépôt: **06.05.86**

Int. Cl.4: **B 64 C 27/10**
**B 64 C 27/12, B 64 C 27/20**

Priorité: **07.05.85 FR 8507061**

Date de publication de la demande:
**25.03.87 Bulletin 87/13**

Etats contractants désignés: **DE GB IT NL**

Demandeur: **Durand, Roger**
**274 Avenue des Poilus**
**F-13012 Marseille (FR)**

Inventeur: **Durand, Roger**
**274 Avenue des Poilus**
**F-13012 Marseille (FR)**

Mandataire: **Sitri, Alain et al**
**7 Rue du Châlet**
**F-13008 Marseille (FR)**

Dispositif de transport et de soulèvement de charges pour leur déplacement par propulsion aérienne.

Perfectionnements aux aérodynes à voilure tournante à deux rotors coaxiaux contrarotatifs, consistant à munir deux couronnes 8 et 10 guidées et entraînées par des galets 6 de pales externes pour former deux rotors de même diamètre, l'aérodyne pouvant être pourvu de carénages améliorant la sécurité et les performances, et comporter un ou plusieurs moteurs.

Utilisation pour le levage et le transport de charges ou de personnel dans et hors effet de sol.

FIG.1

EP 0 215 719 A1

**Description**

PERFECTIONNEMENTS AUX AERODYNES A ROTORS COAXIAUX

L'objet de l'invention concerne un dispositif de transport et de soulèvement de charges pour leur déplacement par propulsion aérienne.

Il est destiné au décollage et à la sustention aérienne, soit pour réaliser des déplacements, soit pour immobiliser des masses pondérales à une certaine hauteur pour les déplacer.

Il est connu d'utiliser des appareils de ce genre à un ou deux rotors, mais jusqu'à ce jour l'entraînement des deux hélices et leur contrôle exigeaient des moyens mécaniques lourds et complexes rendant ces dispositifs inutilisables industriellement aussi bien pour le transport des charges que pour des personnes vu les difficultés de commande et de transmission de puissance ainsi que par l'absence de sécurité.

Le dispositif suivant l'invention supprime ces inconvénients par le fait qu'il comporte un double rotor coaxial supprimant la queue de l'appareil et permettant une réduction de dimension avec gain de masse à vide : de plus, ces deux rotors sont porteurs, leurs couples se compensent supprimant les énergies perdues dans la fonction anti-couple, ce qui augmente la puissance au bénéfice de la sustention. Ces rotors sont contrarotatifs coaxiaux et de même diamètre de façon que la veine d'air ne soit pas mise en rotation et que l'énergie soit entièrement disponible pour la sustention ; enfin, il n'y a plus d'effets gyroscopiques induisant des couplages dissymétriques entre les mouvements de tangage et de roulis, ce qui fait que le pilotage est facilité.

Il est constitué par la combinaison de deux hélices ou rotors horizontaux superposés de même diamètre implantés sur le même axe mais tournant en sens inverse à la même vitesse, ensuite par un dispositif d'entraînement par galets opposés situés sur le même étage entraînant des couronnes concentriques porteuses de voilures tournantes superposées et enfin par une voilure porteuse et directionnelle.

Sur les dessins annexés, donnés à titre d'exemple non limitatif, d'une des formes de réalisation de l'objet de l'invention :

La figure 1 représente l'appareil dans son ensemble vu en élévation.

La figure 2 est une vue en élévation de la couronne directionnelle et portante.

Les figures 3 et 4 représentent à une échelle différente les détails constructifs de l'entraînement.

La figure 5 montre un montage de pale à articulation mécanique.

La figure 6 représente une variante constructive avec deux moteurs de propulsion.

L'appareil est pourvu d'un moteur 1 fixé sur le bâti principal 2 entraînant les poulies 3 et 5 reliées par les courroies 4 aux galets moteurs 6 ayant leur axe parallèle à l'axe principal.

Deux couronnes s'appuient sur ces galets, l'une externe 8 en contact avec la génératrice la plus extérieure des galets, l'autre interne 10 en contact avec la génératrice la plus interne des galets et par conséquent entraînée en sens contraire de la couronne externe.

La couronne externe est munie de pales porteuses 9 fixées sur sa périphérie à l'extérieur. La couronne interne 10 comporte une extension 11 ou potence qui permet de fixer les pales 12 également à l'extérieur. ce qui est un des éléments caractérisque de l'invention.

Les pales 9 et 12 convenablement calées en pas, assurent la sustentaion aérodynamique de l'appareil.

La puissance est transmise aux couronnes 8 et 10 et par elles aux galets 6, ainsi qu'aux autres galets 7 simplement porteurs qui concourent avec les galets 7 à assurer le guidage axial et radial des deux couronnes et à transmettre les forces de portance au bâti principal 2 qui reçoit les charges.

Si la vitesse de rotation de la couronne externe est moindre que celle de la couronne interne, on peut corriger cette différence par le nombre de pales et avec calage plus élevé.

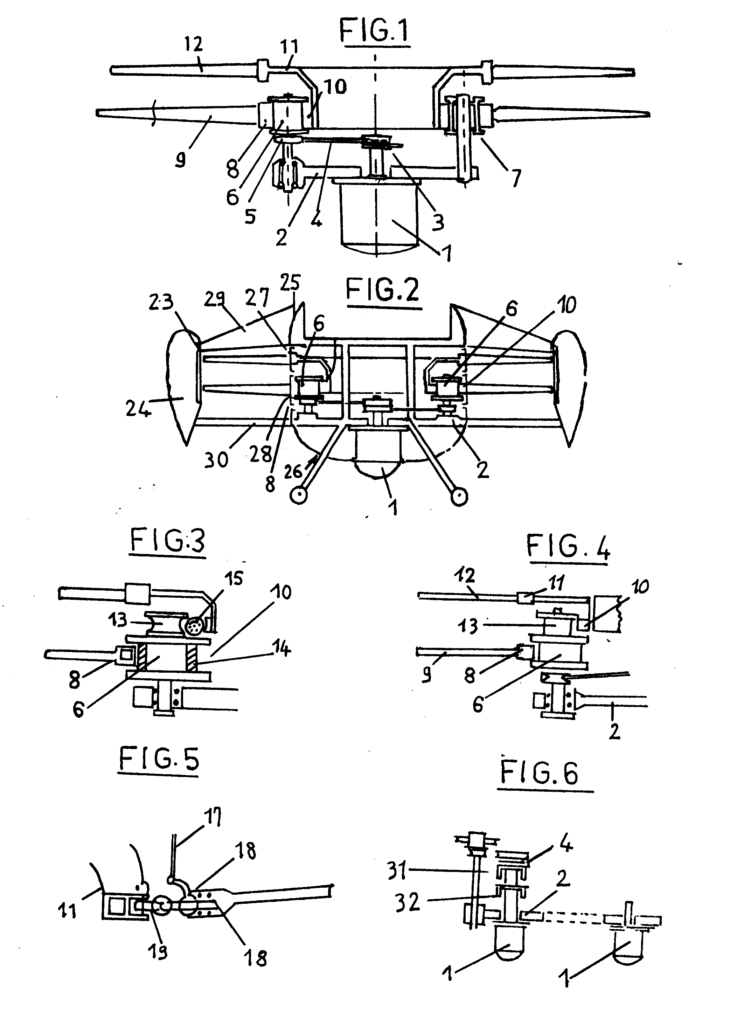

La couronne interne 10 s'appuie sur un deuxième jeu de galets 13 solidaires des galets moteurs 6 ou porteurs 7, mais de diamètre plus petit, (fig 4). Ceci afin d'obtenir une vitesse de rotation égale.Ils assurent alors le même pouvoir de levage.

Une garniture 15, (fig 3) peut être monté sur la couronne. Elle comporte une cavité remplie d'air sous pression qui lui confère les qualités de souplesse d'un pneumatique de véhicule.

On obtient ainsi un meilleur entraînement, une réduction d'usure et une amélioration au point de vue sonorité.

La pale 9 ou 12 (Fig 4) est libre en rotation sur une fusée 16 et comporte un levier de commande 17 actionné par une biellette 18. La fusée 16 est articulée en battement sur un maillon 19 lui-même articulé, entraînée sur la couronne 8 ou 11.

On obtient ainsi une possibilité de pilotage en altitude, en direction et en inclinaison longitudinale et latérale, auxquels sont liés les déplacements longitudinaux, latéraux ou de virage.

Le carénage externe (figure 2) délimite le contour externe de la veine d'air qui traverse les rotors. Il comporte une partie résistante 23 et un élément attenant 24 de forme appropriée à sa destination.

La veine d'air annulaire est délimitée sur sa partie interne par les calottes 25 et 26 solidaires du bâti 2 et des portions cylindriques tournantes 27, 28 fixées sur les rotors au niveau des pieds de pales. Le carénage externe est rendu solidaire du bâti central par des ailettes 29 et 30 sensiblement radiales.

Il est connu théoriquement et pratiquement qu'un tel type de carénage améliore les performances d'un rotor donné, par l'effet de "diffusion" sur la partie de veine sortant en aval, qui augmente sa section et donc la ralentit, en augmentant la poussée. A puissance donnée, un rotor caréné fournit une portance plus élevée, comme celle que donnerait un rotor de plus grand diamètre.

Ainsi, l'adjonction d'un carénage non seulement améliore la sécurité, mais aussi la performance en charge décollable. Il faut noter aussi la possibilité de le compléter à la partie inférieure par une jupe souple convenablement formée qui pour des utilisations près du sol transformerait cet engin en appareil sur "coussin d'air" qui, comme il est bien connu, ne demande qu'une très faible puissance pour soulever une charge donnée.

Toujours pour des raisons de sécurité, il est courant de monter sur des aérodynes une pluralité de moteurs, pour parer au cas de la panne de l'un d'entre eux (Fig 6).

Les moteurs 1, 1' sont montés excentriquement sur le bâti 2 et pour permettre leur lancement séparé, ou assurer la continuité de fonctionnement au cas d'arrêt éventuel de l'un d'eux, entraînant les poulies 3, les galets et les couronnes par l'intermédiaire d'un embrayage 32 et d'une roue libre 31, ou d'une combinaison des deux, ces dispositifs étant, ainsi que leur fonctionnement, bien connus par ailleurs.

Chacun des moteurs peut ainsi entraîner un ou plusieurs galets de sorte que la charge de l'entraînement des couronnes est mieux répartie.

D'autre part, la position excentrée des moteurs dégage la partie centrale de l'appareil, qui peut être utilisée pour le logement de certaines charges qui sont alors parfaitement centrées.

## Revendications

1° Dispositif de transport et de soulèvement de charges pour leur déplacement par propulsion aérienne à sustentaion aérodynamique à voilure tournante à deux rotors coaxiaux de même diamètre tournant à la même vitesse avec rotation inversée par double couronne entraînée par galets opposés et comportant une couronne fonctionnelle par deux rotors (9, 12) extraînés en rotation par deux galets (8, 10) dont l'un est entraîné par un ou deux moteurs (1, 1') montés sur le bâti (2) étant précisé que le couronne interne (10) comporte une potence (11) permettant la superposition des pales (12) externes.

2° Dispositif suivant la revendication 1 se caractérisant par le fait que les galets superposés (6, 13) sont de diamètre différent pour rendre égale les vitesses de rotation alors que, soit les galets, soit les couronnes peuvent comporter des garnitures souples (15).

3° Dispositif suivant la revendication 1 se caractérisant par le fait que les pales (9, 12) comportent un levier de commande (17) et sont montées sur la couronne (8) ou l'extension (11) par l'intermédiaire de commandes agissant sur le pas des pales.

4° Dispositif suivant la revendication 1 se caractérisant par le fait que l'appareil comporte un carénage fixe de protection (23) un élément attenant (24) des calottes (25, 26) limitant la veine d'air annulaire des portions cylindriques tournantes (27, 28) fixées sur les rotors au niveau des pieds de pale et des ailettes (29, 30) radiales.

86430017 3

FIG.1

FIG.2

FIG.3

FIG.4

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | US-A-2 466 821 (OWEN)<br>* Colonne 1, lignes 49-54; colonne 3, lignes 31-58; figure 4 * | 1 | B 64 C 27/10<br>B 64 C 27/12<br>B 64 C 27/20 |
| | --- | | |
| A | FR-A-2 506 256 (CANADAIR)<br>* Page 3, lignes 10-13,20-23; page 4, ligne 8 - page 5, ligne 5; figure 1 * | 1,3 | |
| | --- | | |
| A | FR-A-2 538 341 (NEGRE)<br>* Page 1, lignes 4-10; page 5, ligne 37 - page 6, ligne 13; fig-ure 1 * | 1,4 | |
| | --- | | |
| A | US-A-3 103 327 (PARRY)<br>* Colonne 4, lignes 43-49; figure 5 * | 2 | DOMAINES TECHNIQUES RECHERCHES (Int. Cl.4)<br><br>B 64 C |
| | ----- | | |

Le présent rapport de recherche a été établi pour toutes les revendications

| Lieu de la recherche | Date d'achèvement de la recherche | Examinateur |
|---|---|---|
| LA HAYE | 21-10-1986 | ZERI A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 R2